# EUROPEAN PATENT APPLICATION

(11) **EP 4 800 501 A1**
(43) Date of publication of application: **02.09.2026**
(21) Application number: 25160289.2
(22) Date of filing: 26.02.2025
(51) Int. Cl.: G05B 23/02, G06F 16/3329

(54) **MONITORING ASSISTANT AND METHOD FOR PROVIDING AN INTERACTIVE INSPECTION REPORT ABOUT THE STATUS OF A MACHINE**

(71) Applicant: Siemens Aktiengesellschaft, 80333 München (DE)
(72) Inventor: Geipel, Markus Michael, 81739 München (DE); Kehrer, Johannes, 81829 München (DE); Mittelstädt, Sebastian, 89423 Gundelfingen a.d. Donau (DE); Rothering, Marcel, 90449 Nürnberg (DE)
(74) Representative: Siemens Patent Attorneys

(57) **Abstract**

Monitoring assistant (20) for providing an interactive inspection report about the status of a machinery (40) comprising a prompt generator (25), a data interface (27) connecting the prompt generator (25) with an Al-based information system (30), a machine interface (28) connecting the prompt generator (25) with the machinery (40), and a user interface (21), and configured to perform following steps:
- retrieving information relevant for inspecting and/or error-handling of the machinery (40) by inputting at least one initial prompt into the information system (30), the initial prompt being generated by the prompt generator (25) depending on an initial event,
- displaying the retrieved information in an interactive inspection report by the user interface (21),
- presenting feedback buttons (29) indicating at least one feedback option dependent on different aspects of the retrieved information at the user interface (21), and
- Transmitting the feedback options indicated by those feedback buttons (29), which are activated by an operator (10) to the prompt generator (25) for requesting additional information related to the machinery (40).

## Description

### Field of the Invention

The present disclosure relates to a monitoring assistant and a computer-implemented method for providing an interactive inspection report about the status of a machine via a user interface

### Background

In an industrial environment, such as factories or production lines, the fast resolution of errors and failures in machinery equipment is crucial for various reasons, for example, ensuring the safety of human lives and preventing severe damage or destruction of equipment. Additionally, extended downtimes, e.g. beyond 30 minutes, can result in significant penalties or fines for the supplier of the equipment.

In such situations, operators must quickly identify which equipment is failing and determine the reason for the failure under immense time pressure. In some cases, operators may have access to basic diagnostic tools or software that can provide limited information about the equipment's status or potential causes of failure. However, these tools often require operators to input lengthy queries or navigate on menus, which can be time-consuming and impractical in urgent situations.

Therefore, it is an object of the present invention to provide to generate an interactive inspection report about a machine quickly and in a user-friendly manner even in a factory environment.

### Brief Summary of the Invention

This object is solved by the features of the independent claims. The dependent claims contain further embodiment of the invention.

A first aspect concerns a monitoring assistant for providing an interactive inspection report about the status of an industrial machinery comprising a prompt generator, a data interface connecting the prompt generator with a Large Language Model / Al based information system, a machine interface connecting the prompt generator with the machinery, and a user interface, a machine interface connecting the prompt generator with the machinery, and a user interface, and configured to perform following steps:
- retrieving information relevant for inspecting and/or error-handling of the machinery by inputting at least one initial prompt into the information system, the initial prompt being generated by the prompt generator depending on an initial event, e.g., recently received status data of the machinery,
- displaying the retrieved information in an interactive inspection report via the user interface to the operator,
- presenting feedback buttons indicating at least one feedback option dependent on different aspects of the retrieved information at the user interface, and
- transmitting the feedback options indicated by those feedback buttons, which are activated at the user interface by the operator to the prompt generator for requesting additional information related to the machinery.

A second aspect concerns a computer-implemented method for providing an interactive inspection report about the status of a machinery comprising following steps:
- retrieving information relevant for an operator of the machinery by inputting at least one initial prompt into an Al-based information system, the initial prompt being generated by the prompt generator depending on an initial event, e.g., recently received status data of the machinery,
- displaying the retrieved information in an interactive inspection report via a user interface to the operator,
- presenting feedback buttons indicating at least one feedback option dependent on different aspects of the retrieved information at the user interface, and
- transmitting the feedback options indicated by those feedback buttons, which are activated by the operator to the prompt generator for requesting additional information related to the machinery.

A third aspect of the invention concerns a computer program product comprising instructions which, when the program is executed by one or more computers, cause the one or more computers to carry out the steps of the method.

A prompt in the context of Al-based chatbots and large language models (LLMs) refers to text or instructions provided to the LLM to generate a desired output, serving as the starting point or trigger for the LLM to engage in language generation, analysis, or task completion.

Advantageously, the described approach provides an inspection report enabling interaction between the operator and the monitoring assistant in which the operator does not need to type. The user interface only activates buttons to enter feedback, which works fast and reliably in a factory setting. The system provides information proactively, which is especially helpful to unexperienced operators. The Al based information system, specifically a Large Language Model or an Industrial Foundation model trained on the machinery to be monitored provides reliable, comprehensive and divers information and/or instructions.

The inspection report itself serves a double purpose. It is the medium of communication with the operator, but it also serves as documentation of the situation. This eliminates the need for the operator to perform additional paperwork, reducing their workload.

### Description of Embodiments

In an embodiment of the monitoring assistant the prompt generator retrieves additional information by generating at least one additional prompt depending on the transmitted feedback option and inputs the additional prompt into the information system. The additional information, which is output in return by the information system is displayed by the user interface.

Advantageously, additional information is provided depending on the feedback activated by the operator. Thus, the inspection report is enhanced interactively and flexible with respect to the requirements or tasks of the operator.

In an embodiment the initial prompt and additional prompts are generated by the prompt generator based on a set of prompt templates, preferably stored in a template database.

Using predefined prompt templates optimizes the monitoring assistant with respect to low processing capacity, a fast response and providing guidance on further aspects to be checked, which is especially advantageous for unexperienced operators.

In an embodiment the prompt generator is configured to amend the additional prompt with context information which is retrieved from a Retrieval Augmented Generation (RAG) system and/or from additional functionalities, and/or the prompt generator is configured to amend the additional prompt with additional machine information retrieved via the machine interface from the machinery.

Thus, the information system provides in return to the input of the amended additional prompt additional information, which is focused on the context, e.g., of the environment of the machinery and specifics of the machinery. This leads to a reduced response time for the delivery of the inspection report. When used for error-handling, the time for eliminating the error is optimized and related down-times reduced.

In an embodiment the feedback options are predefined and/or generated context-specifically depending on the retrieved information by the information system.

Predefined feedback options require low processing capacity. Context-specific feedback leads to more precise additional information, fewer feedback loops and thus faster provision of a comprehensive inspection report. Both options provide guidance on further aspects to be checked, which is especially advantageous for unexperienced operators.

In an embodiment the displayed information and additional information comprises information concerning at least one of fault diagnosis, instructions for error-handling depending on the received status data of the machinery.

This type of information is most relevant when working on the shop floor.

In an embodiment the interactive inspection report comprises all displayed information, transmitted feedback option and additional feedback in sequence of occurrence and is provided via the user interface to the operator.

Thus, the inspection report itself serves a double purpose. It is the medium of communication with the operator, but it also serves as documentation of the current situation of the machinery.

In an embodiment the interactive inspection report is manipulated by inputting at least one function of a set of predefined functions to the information system by the prompt generator.

For instance, such a predefined function condenses the report by eliminating repetitive information providing a more concise report.

In an embodiment at least a subset of the set of predefined functions are displayed in a multiple-choice style at the user interface each displayed function being activatable via a button.

This provides an operator-specific inspection report.

In an embodiment additional information is iteratively retrieved in a feedback loop triggered by the prompt generator and/or the user interface providing further feedback.

Thus, the degree of details collected in the inspection report can be flexibly controlled via the user interface and the prompt generator.

In an embodiment the machinery comprises one machine or a set of machines, wherein one or a subset of the set of machines are selected via the user interface for which the interactive inspection report is generated.

Thus, the monitoring apparatus provides flexibility in that the inspection report covers a selected subset of machines of the machinery or all machines of the machinery.

In an embodiment the one machine or the set of machines is selected when a first information is displayed or when any of the additional information is displayed.

This allows flexible reaction on the provided information and the resulting status of the machinery.

### Brief description of the drawings

The invention will be explained in more detail by reference to accompanying figures. Similar objects will be marked by the same reference signs.
- Figure 1: schematically illustrates a diagnostics tool according to the prior art.
- Figure 2: schematically illustrates an embodiment of the inventive monitoring assistant.
- Figure 3: schematically illustrates an embodiment of the information flow of the inventive method.

It is noted that in the following detailed description of embodiments, the accompanying drawings are only schematic, and the illustrated elements are not necessarily shown to scale. Rather, the drawings are intended to illustrate functional units and the co-operation of the functional units. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional module described for an apparatus can perform a functional step of the related method and vice versa.

### Description of Examples

Traditionally, operators have relied on manual troubleshooting to resolve errors and failures in machinery equipment. This typically involves physically inspecting the equipment, checking for visible signs of damage or malfunction, and referring to equipment manuals or documentation for guidance.

In some cases, operators may have access to basic diagnostic tools or software that can provide limited information about the equipment's status or potential causes of failure. However, these tools often require operators to input specific queries or commands or navigate complicated menus which can be time-consuming and impractical in urgent situations.

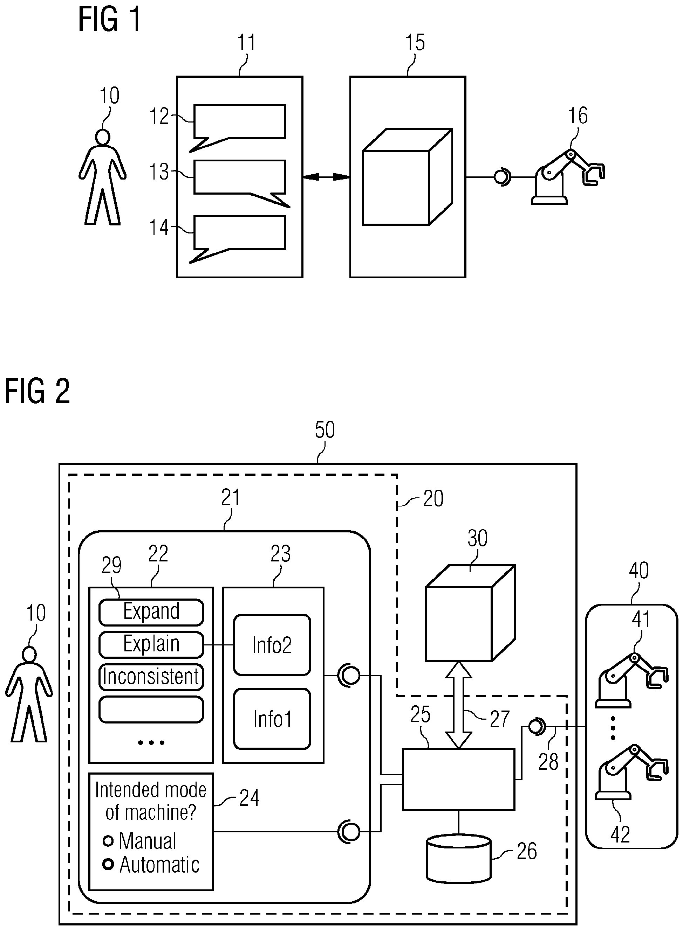

Alternatively, an operator 10 of machinery equipment 16 could also interact with an Al chatbot 15 using a standard chat interface 11 as shown in Fig.1. However, the operator 10, especially in an industrial facility, often faces challenges in effectively using the chat interface 11 due to the need to type in lengthy chat prompts 12, 14 to initiate a chat or to react on a response 13 received from the chat bot 15. Even audio input, e.g., via speech recognition, may be difficult, due to environmental noise, especially in an industrial environment. Specifically typing is problematic in a factory setting. Most Human Machine Interfaces (HMIs) do not have a keyboard. Even if a keyboard is available the operator 10 may be wearing protective gloves making it less convenient to type. Thus, the chat interface 11 is simply not a good fit for a factory setting.

The approach disclosed in the following takes the limitations of user input in a factory setting into account, while still leveraging the power and versatility of an Artificial intelligence (Al)-based information system 30, like a chat bot preferably a Large Language Model (LLM).

Fig. 2 shows an embodiment of a monitoring system 50 providing information about a machinery 40 comprising a monitoring assistant 20 and an Al-based information system 30. The machinery 40 comprises one or several machines 41, 42. Machine is used here as a synonym for equipment, device and similar. In an embodiment the machinery 40 is located in an industrial environment, e.g., in a manufacturing facility, a process industry facility, a transmission grid facility or transportation facility.

In an embodiment the monitoring system 50 is implemented as a multi-agent system. The individual agents are the user interface 21, the prompt generator 25 and the Al-based information system 30. The individual agents work autonomously but interact and coordinate with each other to achieve a common goal or objective. This leads to more robust, flexible, and intelligent system compared to a single centralized controller.

In an embodiment the Al-based information system 30 is implemented as a chat bot, preferably comprising a Large Language model, further on abbreviated with LLM. The information system 30 is preferably enhanced/trained with machinery-specific information like operation manuals, diagnosis manuals, fault analysis documents, logging data. In an embodiment the Al-based information system 30 comprises a multi-modal industrial foundation model trained additionally with at least one of time-series data, Computer aided design, computer-aided-manufacturing of the machinery.

The monitoring assistant 20 comprises a user interface 21, a prompt generator 25, a data interface 27 connecting the prompt generator 25 with an Al-based information system 30 and a machine interface 28 connecting the prompt generator 25 with the machinery 40. The user interface 21 provides a human-machine-interface displaying an interactive report 23. In the traditional approach shown in Fig. 1 the diagnosis tool or chat-bot would collect information about the machinery only upon user request of the operator 10. However, the disclosed monitoring assistant 20 collects information without waiting for user input, e.g., from operator 10.

The monitoring assistant 20 performs following steps. The prompt generator 25 is configured to generate an initial prompt depending on an initial event detected in the monitoring assistant 20. For instance, the initial event is detected when a display of the user interface 21 is unlocked.

Another instance of the initial event is detected when the prompt generator 25 receives status data concerning the machinery 40 via the machine interface 28. In an embodiment, the prompt generator 25 is configured to query status information from the machinery 40 or to receive status information which is sent by the machinery 40 via the machine interface 28.

The prompt generator 25 is configured to retrieve information relevant for inspection and/or error-handling by inputting the initial prompt via the data interface 27 to the Al-based information system 30, further on shortly named information system. The prompt generator is configured to transmit the retrieved information to the user interface 21. The retrieved information is displayed by the user interface 21 in a report area 23. The user interface 21 is configured to present feedback buttons indicating at least one feedback option dependent on different aspects of the retrieved information.

The feedback options are presented in a feedback area 22 of the user interface. The feedback options indicated by those feedback buttons 29, which are activated by an operator 10 are transmitted from the user interface 21 to the prompt generator 25 for requesting additional information related to the machinery 40. The at least one feedback button is implemented by a contact sensor or a touch surface of a display. In an embodiment the feedback button 29 is activated by simplified voice commands. The feedback options are predefined and/or generated context-specifically depending on the retrieved information from the information system by the prompt generator 25.

On receipt of the feedback option the prompt generator 25 generates an additional prompt depending on the content of the feedback option and inputs the additional prompt into the information system 30. The additional information which is received in return from the information system 30 is transmitted to the user interface 21 and displayed in the report area 23. One of the feedback options indicates that no further information is required.

The prompt generator 25 is configured to generate the initial prompt and additional prompts based on a set of predefined prompt templates, preferably stored in a template database 26. Preferably, the prompt generator 25 amends the additional prompt with context information. Context information is retrieved by the prompt generator 25 from a Retrieval Augmented Generation (RAG) system connected and/or by additional functionalities accessible to the prompt generator. Optionally, the prompt generator 25 is configured to amend the additional prompt with additional machine information retrieved via the machine interface 28 from the machinery 40.

In an embodiment of the monitoring system 50 the information system 30 receives the additional prompt and amends it with context information which is retrieved by the information system 30 from the Retrieval Augmented Generation (RAG) system and/or the additional functionalities.

The information and additional information displayed on the user interface 21 comprises information concerning at least one of fault diagnosis, instructions for operation and/or for error-handling of the machinery 40 depending on the received status data.

The interactive inspection report comprises all the displayed information, i.e., the information in reply to the initial prompt and additional information received in reply to the transmitted feedback options and additional feedback in sequence of occurrence. The inspection report is displayed at the user interface and/or provided via the user interface for external storage. Thus, it can be used to document the inspection and/or error-handling.

If additional input from the operator 10 is required to write or improve the inspection report, a multiple-choice-style questionnaire is displayed by the user interface 20. If the information system 30 provides information comprising different options or formulates information needed, the prompt generator 25 generates a prompt asking for a comprehensive and mutually exclusive set of reply-options and transmits it to the information system 30. The reply-options received in return from the information system 30 are displayed by the user interface, for instance in a multiple-choice feedback area 24. Thus, a multiple-choice dialog is initiated. It may however also result in a query for a specific value.

The interactive inspection report is manipulated by at least a subset of the set of predefined functions which are displayed in a multiple-choice style at the user interface each displayed function being activatable via a button inputting at least one function of a set of predefined functions to the information system by the prompt generator. In Fig. 2 the feedback area 22 shows an exemplary set of functions, like "Expand" which indicates that the report shall be expanded with more detailed information. The function "Explain" indicates that explanatory information is requested to the actually provided information. The function "Inconsistent" indicates that the actually provided information is assumed to be inconsistent, and a prompt shall be input to the information system 30 resolving the inconsistency.

Thus, additional information is iteratively retrieved in a feedback loop triggered by the prompt generator and/or the user interface providing further feedback.

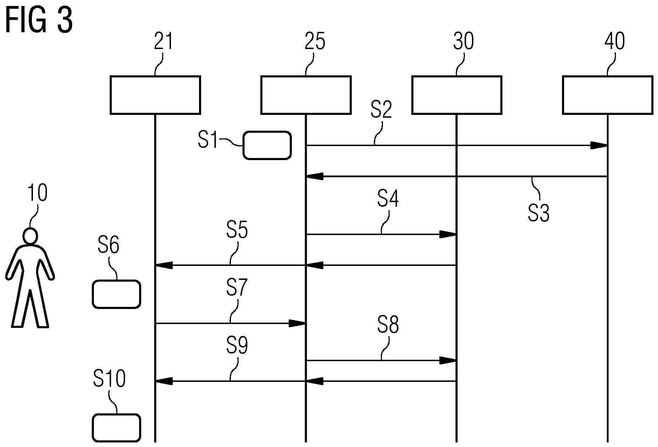

Fig. 3 shows an example of an information flow for providing the interactive inspection report.

In a first step S1 the prompt generator 25 generates an initial prompt triggered by an event, such as receiving a status message from a machinery 40 or detecting that an operator 10 opens or unlocks the user interface. An example of the initial prompt is phrased as follows:
Given the current machine status {Insert all relevant status info}, what aspects of the current situation would be relevant for the operator. Give a bullet point list.

If no status data of the machine is available, the prompt generator 25 asks the machine for status data, see S2. After the status data is received from the machinery, see S3, the prompt generator 25 creates the initial prompt containing the status data and inputs it to the information system 30, see S4.

If the machinery 40 comprises not only one machine but a set of machines, one or a subset of the set of machines for which the interactive report shall be generated, is selected via the user interface 21. The selection of the subset of machines can also be performed during the subsequent dialogue between the monitoring apparatus and the operator 10.

The prompt generator 25 requests the information system 30 to provide the information, e.g. by prompting:
Write a concise status report on the following aspect, citing all relevant data: {aspect}
and transmits the response via the prompt generator 30 to the user interface 21 which displays it as the initial part of the inspection report to the operator 10, see S5. For instance, a list of bullet points with potentially relevant aspects for the operator 10 is generated by the inspection system 30, which is then expanded by the inspection system 30 to the full inspection report.

The operator 10 can now interact with user interface 21 to obtain a more detailed inspection report. If the operator wants more information on a specific section of the report, the section can be selected, e.g., by touching a screen of the user interface on which the section is displayed or a feedback button related to this section. As a result, a feedback menu opens comprising one or several predefined functions, see S6.

In an embodiment predefined feedback options are available at the prompt generator 25, which can be complemented with context-specific feedback options received in return for another prompt from the information system 30. When at least one activated feedback option is received, see S7, the prompt generator 50 inputs additional prompts to the information system 30, see S8. The additional information is forwarded to the user interface 21, see S9 to be displayed and added to the inspection report. Thereby the operator 10 can iteratively improve the selected section of the inspection report, for example, by querying additional information about the machinery 40, other data sources, or even the operator 10.

Optionally, the prompt generator 25 prompts the information system 40 for more context-specific feedback options, which are forwarded to the user interface 21 and added to the feedback dialog.

If the operator 10 clicks the "expand" button on the user interface, the prompt generator 25 receives this feedback option and creates a prompt to ask the information system 30 to extend the respective section of the inspection report, potentially asking for more information form the machine. In case the information system 30 needs information from the operator 10, for instance, which aspect to expand, the prompt generator 25 generates a prompt instructing the information system 30 to formulate this question as a multiple-choice question. The multiple-choice question is rendered as a user interface dialog.

The information system 30 manipulates the inspection report via a set of predefined functions, like "remove paragraph", "change paragraph", "add diagram", "add table", "add link to data", and similar, which the prompt generator 25 offers to the information system 30.

The resulting inspection report is displayed at the user interface 21. Additionally, it is stored for recording the inspection.

The main advantage of the proposed approach is that all decisions required from the operator are simplified to multiple-choice decisions. The operator does not need to type. The user interface only requires clicking on predefined options which works fast and reliably in a factory setting. The system provides information proactively, which is especially helpful to unexperienced operators. The report itself serves a double purpose. It is the medium of communication with the operator, but it also serves as documentation of the situation. This eliminates the need for the operator to perform additional paperwork, reducing their workload.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Monitoring assistant (20) for providing an interactive inspection report about the status of a machinery (40) comprising a prompt generator (25), a data interface (27) connecting the prompt generator (25) with an Al-based information system (30), a machine interface (28) connecting the prompt generator (25) with the machinery (40), and a user interface (21), and configured to perform following steps:
- retrieving information relevant for inspecting and/or error-handling of the machinery (40) by inputting at least one initial prompt into the information system (30), the initial prompt being generated by the prompt generator (25) depending on an initial event,
- displaying the retrieved information in an interactive inspection report by the user interface (21),
- presenting feedback buttons (29) indicating at least one feedback option dependent on different aspects of the retrieved information at the user interface (21), and
- transmitting the feedback options indicated by those feedback buttons (29), which are activated at the user interface (21) by an operator (10) to the prompt generator (25) for requesting additional information related to the machinery (40).

2. Monitoring assistant (20) according to claim 1, wherein retrieving additional information by generating at least one additional prompt depending on the transmitted feedback option by the prompt generator (25), inputting the additional prompt into the information system (30) and displaying the additional information.

3. Monitoring assistant (20) according to any of the preceding claims, wherein the initial prompt and additional prompts are generated by the prompt generator (25) based on a set of prompt templates, preferably stored in a template database (26).

4. Monitoring assistant (20) according to any of the claims 2 or 3, wherein the prompt generator (25) is configured to amend the additional prompt with context information which is retrieved from a Retrieval Augmented Generation (RAG) system and/or by additional functionalities accessible, and/or amend the additional prompt with additional machine information retrieved via the machine interface (28) from the machinery (40).

5. Monitoring assistant (20) according to any of the preceding claims, wherein the feedback options are predefined and/or generated context-specifically depending on the retrieved information from the information system (30).

6. Monitoring assistant (20) according to any of the preceding claims, wherein the displayed information and additional information comprises information concerning fault diagnosis and/or instructions for error-handling of the machinery depending on the received status data.

7. Monitoring assistant (20) according to any of the preceding claims, wherein the interactive inspection report comprises all displayed information, transmitted feedback option and additional feedback in sequence of occurrence and is provided to the operator (10).

8. Monitoring assistant (20) according to claim 6 or 7, wherein the interactive inspection report is manipulated by inputting at least one function of a set of predefined functions to the information system (30) by the prompt generator (25).

9. Monitoring assistant (20) according to claim 8, wherein at least a subset of the set of predefined functions are displayed in a multiple-choice style at the user interface (21) each displayed function being activatable via a feedback button (29).

10. Monitoring assistant (20) according to claim 2, wherein additional information is iteratively retrieved in a feedback loop triggered by the prompt generator (25) and/or the user interface (21) providing further feedback.

11. Monitoring assistant (20) according to any of the preceding claims, wherein the machinery (40) comprises one machine or a set of machines (41, 42, ...), wherein one or a subset of machines are selected from the set of machines (41, 42, ...) via the user interface (21) for which the interactive report is generated, and
wherein the one machine or the set of machines (41, 42, ...) is selected when a first information is displayed or when any of the additional information is displayed.

12. Monitoring system (50) comprising an Al-based information system (30) and a monitoring assistant (20) according to claims 1-11.

13. Computer-implemented method for providing an interactive inspection report about the status of a machinery (40) comprising following steps:
- retrieving information relevant for inspecting and/or error-handling of the machinery (40) by inputting at least one initial prompt into an information system (30), the initial prompt being generated by a prompt generator (25) depending on an initial event,
- displaying the retrieved information in an interactive inspection report by a user interface (21),
- presenting feedback buttons (29) indicating at least one feedback option dependent on different aspects of the retrieved information at the user interface (21), and
- transmitting the feedback options indicated by those feedback buttons (29), which are activated at the user interface (21) by an operator (10) to the prompt generator (25) for requesting additional information related to the machinery (40).

14. Computer-implemented method according to claim 13, wherein the prompt generator (25), the Al-based information system (30), a machine interface (28) connecting the prompt generator (25) with the machinery (40) to be monitored, and the user interface (21) are provided by a monitoring assistant (20) configured according to claims 1-11.

15. A computer program product comprising instructions which, when the program is executed by one or more computers, cause the one or more computers to carry out the steps of the method of claim 13-14.
